# EUROPÄISCHE PATENTSCHRIFT

(11) **EP 1 230 617 B1**
(45) Veröffentlichungstag und Bekanntmachung des Hinweises auf die Patenterteilung: **18.08.2004**
(21) Anmeldenummer: 00992958.9
(22) Anmeldetag: 31.10.2000
(51) Int. Cl.: G06K 1/00

(54) **KARTENFÖRMIGER DATENTRÄGER MIT ANZEIGEEINRICHTUNG**
CARD-SHAPED DATA CARRIER HAVING A DISPLAY DEVICE
SUPPORT DE DONNEES SOUS FORME DE CARTE POURVU D'UN DISPOSITIF D'AFFICHAGE

(30) Priorität: 04.11.1999 DE 19963165
(43) Veröffentlichungstag der Anmeldung: 14.08.2002
(73) Patentinhaber: Giesecke & Devrient GmbH, 81677 München (DE)
(72) Erfinder: MÖDL, Albert, 86368 Gersthofen (DE); HOHMANN, Arno, 81369 München (DE)
(74) Vertreter: Klunker . Schmitt-Nilson . Hirsch
(86) Internationale Anmeldenummer: PCT/EP2000/010744
(87) Internationale Veröffentlichungsnummer: WO 2001/033487

(56) Entgegenhaltungen:
- WO-A-98/49652
- DE-A- 19 732 159

## Beschreibung

Die Erfindung betrifft einen kartenförmigen Datenträger, insbesondere eine Chipkarte, gemäß dem Oberbegriff des Anspruchs 1 sowie entsprechende Verfahren zu dessen Herstellung gemäß dem Oberbegriff der Ansprüche 11 und 16.

In gattungsgemäßen Datenträgern nach dem Stand der Technik werden mechanisch flexible Anzeigeeinrichtungen eingesetzt, wie sie beispielsweise in der nicht vorveröffentlichten deutschen Patentanmeldung DE 199 23 138.9 beschrieben werden. Eine zum Anzeigen von Informationen dienende Funktionsschicht, beispielsweise auf der Basis von Flüssigkristallen oder leuchtenden Materialien, befindet sich hierbei zwischen zwei flexiblen Trägerfolien aus Kunststoff, wie z.B. Polyethylenterephtalat (PET).

In der deutschen Offenlegungsschrift DE-A-197 32 159, gegen die die Ansprüche abgegrenzt sind, wird eine Chipkarte mit Flüssigkristall-Display beschrieben. Beide Trägerplatten des Displays bestehen entweder aus Glas oder aus Kunststoff. Alternativ ist vorgesehen, daß eine der Trägerplatten aus Glas und die andere aus Kunststoff besteht.

Aus der WO 98/49652 ist eine Chipkarte mit einem Flüssigkristall-Display bekannt, bei welcher eine Flüssigkristallschicht zwischen zwei Kunststoffschichten des Chipkartenkörpers eingebettet ist.

Trägerfolien aus Kunststoff bieten jedoch im allgemeinen keine ausreichende Abdichtung der Funktionsschicht gegenüber Gasen aus der Umgebung, wie z.B. O₂ oder H₂O. Je nach Empfindlichkeit der in der Funktionsschicht enthaltenen Substanzen ist daher die Lebensdauer solcher Anzeigen für viele Anwendungen zu kurz.

Darüber hinaus werden in solchen Anzeigen relativ dicke Folien eingesetzt, um neben einer Reduzierung der Gasdurchlässigkeit auch eine ausreichend hohe mechanische Stabilität bei deren Herstellung sowie deren Einbau in kartenförmige Datenträger zu erreichen. Große Foliendicken, die bei typischen Trägerfolien nach dem Stand der Technik etwa 0,2 mm betragen, sind jedoch unerwünscht, da hierdurch eine Integration der Anzeige in den kartenförmigen Datenträger ohne Überschreitung der Normdicke, welche z.B. bei Chipkarten 0,76 mm beträgt, erschwert wird.

Um eine ausreichende Abdichtung der Funktionsschicht gegen einen Gasoder Flüssigkeitsaustausch mit der Umgebung zu gewährleisten, werden daher meist Trägerschichten aus Glas verwendet, welche jedoch im allgemeinen keine oder nur eine geringe mechanische Flexibilität aufweisen. Eine zu starke Biegung der Anzeige bzw. der Karte würde zum Bruch der Anzeige führen. Daher ist es in kartenförmigen Datenträgern erforderlich, eine Trägerschicht aus Glas mit einer biegesteifen Basisschicht zu kombinieren. Ein kartenförmiger Datenträger verliert hierdurch jedoch im Bereich der Anzeige seine mechanische Verformbarkeit und eignet sich daher weniger zum Mitführen in Brieftaschen, Geldbörsen oder ähnlichem.

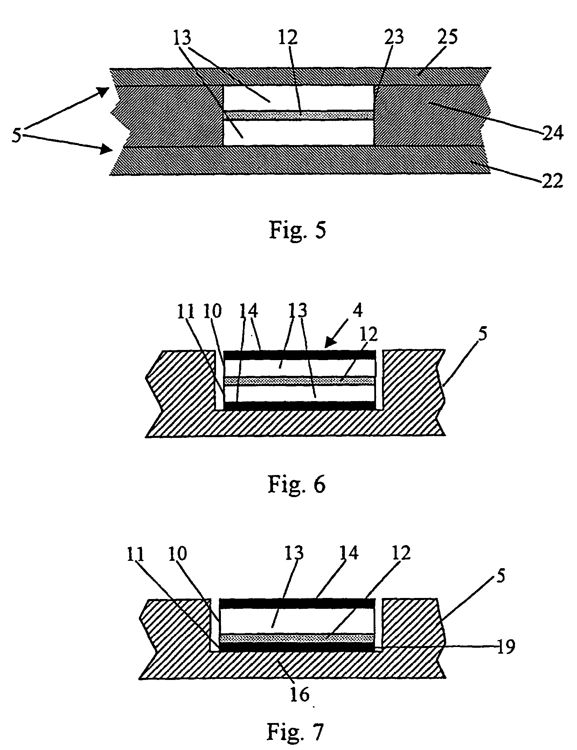

In Fig. 6 ist, gemäß einem nicht veröffentlichten, firmeninternen Stand der Technik, eine Anzeigeeinrichtung 4 dargestellt, bei welcher sich der Glas-Kunststoff-Verbund in beiden Trägerschichten 10 und 11 jeweils aus einer Dünnglasschicht 13 und einer separaten Kunststoffschicht 14 zusammensetzt. Durch die Verwendung eines solchen Glas-Kunststoff-Verbunds ist auch bei der in diesem Beispiel gezeigten Anzeigeeinrichtung ein hohes Maß an mechanischer Flexibilität bei guter Abdichtung gewährleistet.

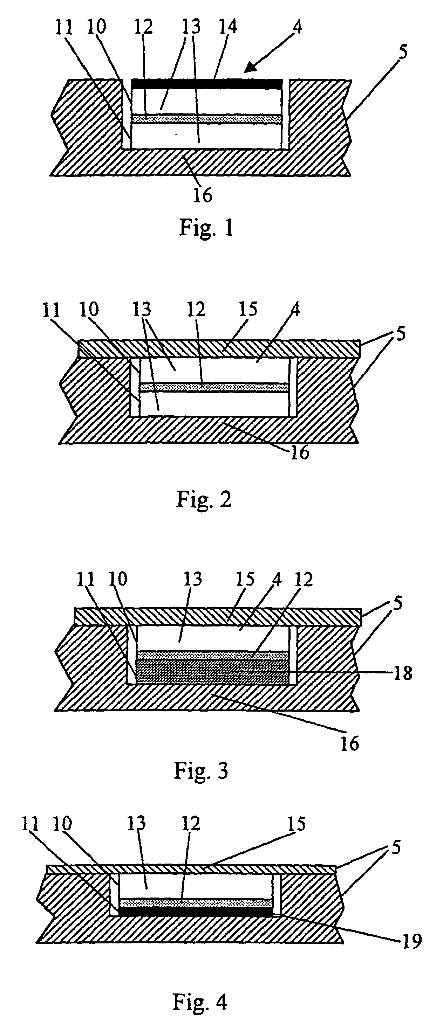

Die Fig. 7 zeigt eine Anzeigeeinrichtung, welche gegenüber der in Fig. 6 dargestellten dadurch weitergebildet ist, daß die untere Trägerschicht 11 durch eine Versiegelungsschicht 19 gebildet wird. Für diese Anzeigeeinrichtung gelten die in der Beschreibung der Figuren 4 und 6 genannten, entsprechenden Erläuterungen und Vorteile.

Die Vorrichtungen in den Fig. 6 und 7 fallen nicht unter die Erfindung der vorliegenden Anmeldung; sie geben nur Hintergrundinformation.

Der Erfindung liegt die Aufgabe zugrunde, einen kartenförmigen Datenträger mit einer mechanisch flexiblen Anzeigeeinrichtung, welche bei hoher Bruchsicherheit eine gute Abdichtung der Funktionsschicht gegen Gas- oder Flüssigkeitsaustausch mit der Umgebung gewährleistet, sowie Verfahren zur Herstellung derartiger Datenträger anzugeben.

Erfindungsgemäß wird die Aufgabe durch den kartenförmigen Datenträger mit den Merkmalen des Anspruchs 1 gelöst. Verfahren zur Herstellung derartiger Datenträger sind in den Ansprüchen 11 und 16 angegeben.

Ein Grundgedanke der Erfindung liegt darin, daß mindestens eine der beiden Trägerschichten aus einem mechanisch flexiblen Glas-Kunststoff-Verbund gebildet ist, welcher sich aus einer Dünnglasschicht und einem aus Kunststoff bestehenden Teilbereich des Kartenkörpers zusammensetzt.

Die eingesetzten Dünnglasschichten gewährleisten einerseits eine gute Abdichtung der von den Trägerschichten eingeschlossenen Funktionsschicht gegen Gas- oder Flüssigkeitsaustausch mit der Umgebung und weisen andererseits aufgrund ihrer geringen Dicke von typischerweise etwa 10 bis 100 µm eine hohe mechanische Flexibilität auf. Derartige Schichten werden daher auch als Glasfolien bezeichnet.

Der sich aus der Dünnglasschicht und einem Teilbereich des Kartenkörpers zusammensetzende Glas-Kunststoff-Verbund gewährleistet darüber hinaus eine hohe Bruchsicherheit der Trägerschicht und damit der Anzeigeeinrichtung, da die Dünnglasschicht durch den mit ihr verbundenen und aus Kunststoff bestehenden Teilbereich des Kartenkörpers mechanisch stabilisiert wird.

Durch die Ausbildung eines derartigen Glas-Kunststoff-Verbunds ist darüber hinaus eine einfache und zuverlässige Integration der Anzeigeeinrichtung in den Kartenkörper möglich, wobei zusätzlich eine verbesserte Anpassung des Biegeverhaltens des Kartenkörpers an das Biegeverhalten der Anzeigeeinrichtung erreicht wird.

Als Kunststoff werden im allgemeinen organische Polymere eingesetzt, wie z.B. Polyvinylchlorid (PVC), Polycarbonat (PC), Acrylnitil-Butadien-Styrol (ABS) oder Polyethylenterephtalat (PET).

In einer Ausgestaltung der Erfindung ist vorgesehen, daß eine der beiden Trägerschichten aus einem Glas-Kunststoff-Verbund gebildet ist, welcher sich aus einer Dünnglasschicht und dem aus Kunststoff bestehenden Teilbereich des Kartenkörpers zusammensetzt und die andere der beiden Trägerschichten aus einem Glas-Kunststoff-Verbund gebildet ist, welcher sich aus einer Dünnglasschicht und einer separaten Kunststoffschicht zusammensetzt. Die separate Kunststoffschicht ist hierbei nicht Teil des Kartenkörpers und besteht aus einer dünnen Kunststoffolie oder Kunststoffbeschichtung mit typischen Dicken zwischen etwa 5 und 200 µm. Die separate Kunststoffschicht ist damit Teil eines Glas-Kunststoff-Verbunds, welcher getrennt vom Kartenkörper ausgebildet wird. Dieser Glas-Kunststoff-Verbund kann seinerseits entweder lose in den Kartenkörper eingebracht sein oder mit diesem verbunden sein, z.B. durch Kleben oder Laminieren. Durch diesen vom Kartenkörper getrennten Glas-Kunststoff-Verbund ist eine gute Anpassung von Anzeigeeinheit und Kartenkörper bei einer Verformung, z.B. Biegung, desselben möglich, was eine hohe Bruchsicherheit gewährleistet.

Bevorzugterweise ist hierbei der sich aus einer Dünnglasschicht und einer separaten Kunststoffschicht zusammensetzende Glas-Kunststoff-Verbund so angeordnet, daß die Dünnglasschicht auf der der Funktionsschicht zugewandten Seite und die separate Kunststoffschicht auf der von der Funktionsschicht abgewandten Seite liegt. Auf diese Weise wird ein diffusiver Gas- bzw. Flüssigkeitsaustausch zwischen Funktionsschicht und Umgebung besonders gut verhindert. Die chemische Inertheit der Dünnglasschichten wirkt sich darüber hinaus positiv auf die Lebensdauer der Anzeigeeinrichtung aus, da hierdurch unerwünschte chemische Reaktionen im Kontaktbereich von Funktions- und Trägerschicht vermieden werden können.

In einer bevorzugten Weiterbildung der Erfindung ist vorgesehen, daß sich der Glas-Kunststoff-Verbund in der oberen Trägerschicht aus einer Dünnglasschicht und einem oberen Teilbereich des Kartenkörpers zusammensetzt. Hierbei wird die obere Trägerschicht der Anzeigeeinrichtung durch einen Teilbereich des Kartenkörpers abgedeckt, was eine besonders gute Abdichtung der Anzeigeeinrichtung, und damit der Funktionsschicht, gegen Gasoder Flüssigkeitsaustausch mit der Umgebung des Datenträgers gewährleistet. Der mit der Dünnglasschicht verbundene obere Teilbereich des Kartenkörpers kann beispielsweise eine Polymerbeschichtung oder eine auflaminierte Kunststoffolie sein, welche zumindest in einem Bereich der Anzeigeeinrichtung optisch transparent ist.

Weitere Ausführungsformen der Erfindung sehen vor, daß die untere Trägerschicht eine Substratschicht aus einem mechanisch flexiblen Material ist. Als Substratschicht eignen sich beispielsweise dünne Folien aus Metall oder ausreichend gasdichten Kunststoffen. Da eine optische Transparenz der unteren Trägerschicht nicht zwingend erforderlich ist, kann das Hauptaugenmerk bei der Auswahl geeigneter Materialien auf deren mechanische oder fertigungstechnische Eigenschaften gelegt werden.

Als untere Trägerschicht kann auch eine die Funktionsschicht versiegelnde, mechanisch flexible Versiegelungsschicht vorgesehen sein. Eine derartige Versiegelungsschicht kann aus einer geeigneten Beschichtung bestehen und führt zu einer weiteren Reduzierung der Dicke der Anzeigeeinrichtung.

Bei der Auswahl des geeigneten Materials für die Substratschicht bzw. die Versiegelungsschicht ist es von Vorteil, wenn die Substratschicht bzw. die Versiegelungsschicht aus einem Material besteht, dessen Gasdiffusionskoeffizient im Größenbereich von Glas liegt. Hierdurch wird auch bei einem Einsatz anderer Materalien als Glas eine gute Abdichtung der Funktionsschicht gewährleistet.

Die Funktionsschicht weist bevorzugterweise eine elektronisch ansteuerbare Anzeige auf der Basis von Flüssigkristallen (LC), lichtemittierenden Dioden (LED) oder lichtemittierenden organischen Polymeren auf. Diese Anzeigetypen erlauben eine einfache, präzise und zuverlässige Steuerung der Anzeige und damit der darzustellenden Information.

Es ist außerdem bevorzugt, daß die Funktionsschicht elektronische Einrichtungen, wie z.B. Elektroden, und optische Einrichtungen, beispielsweise Filter oder Polarisatoren, zur Steuerung bzw. Beeinflussung der Darstellung von Informationen aufweist. Durch einen solchen modularen Aufbau aus separaten Komponenten kann bei entsprechender Auswahl von geeigneten Materalien und der Zusammensetzung der Funktionsschicht bzw. der Trägerschichten eine gewünschte mechanische Flexibilität der Anzeigeeinrichtung besonders einfach erreicht werden.

Das erfindungsgemäße Verfahren zur Herstellung eines kartenförmigen Datenträgers sieht vor, daß der Kartenkörper aus mehreren Kartenschichten durch Kleben oder Laminieren zusammengesetzt wird, wobei mindestens eine der Kartenschichten aus Kunststoff besteht. Die Anzeigeeinrichtung wird hierbei in den Kartenkörper dadurch eingebracht, daß mindestens eine Dünnglasschicht der Anzeigeeinrichtung mit einer aus Kunststoff bestehenden Kartenschicht des Kartenkörpers durch Kleben oder Laminieren verbunden wird, wodurch ein sich aus der Dünnglasschicht der Anzeigeeinrichtung und der aus Kunststoff bestehenden Kartenschicht des Kartenkörpers zusammensetzender Glas-Kunststoff-Verbund gebildet wird. Hierdurch läßt sich der Glas-Kunststoff-Verbund, welcher eine hohe Bruchsicherheit sowie eine gute Abdichtung der Funktionsschicht gewährleistet, ohne wesentlichen Zusatzaufwand während des Kartenfertigungsverfahrens herstellen. Der Einsatz von eigens für diesen Zweck hergestelltem, teuerem Verbundglas kann dadurch umgangen werden. Ebenso entfallen dadurch etwaige zusätzliche Schritte bei der Verarbeitung von Verbundglas: beispielsweise kann einfaches Dünnglas üblicherweise durch Ritzen und Brechen auf eine gewünschte Größe gebracht werden, während zu diesem Zweck bei Verbundglas andere, aufwendigere Verfahren erforderlich sind.

In einer bevorzugten Weiterbildung des erfindungsgemäßen Verfahrens sind folgende Verfahrensschritte vorgesehen: Bereitstellung einer ersten Kartenschicht; Aufbringen mindestens einer mit einer Aussparung zur Aufnahme der Anzeigeeinrichtung versehenen Inlettfolie auf die erste Kartenschicht durch Kleben oder Laminieren; Einbringen der Anzeigeeinrichtung in die Aussparung der Inlettfolie; Aufbringen einer zweiten Kartenschicht auf die Inlettfolie durch Kleben oder Laminieren. Auf diese Weise ist eine besonders einfache Einbringung der Anzeigeeinrichtung in den Kartenkörper möglich. In der wenigstens einen Inlettfolie können darüber hinaus gegebenenfalls elektronische Schaltungseinrichtungen integriert werden, beispielsweise integrierte Schaltkreise zur Ansteuerung der Anzeigeeinrichtung und/oder zur Kommunikation mit einem externen Terminal. Hierunter fallen unter anderem auch Spulen, Kondensatoren und galvanische Kontaktstellen.

In einer Variante des erfindungsgemäßen Verfahrens wird die Anzeigeeinrichtung als vorgefertigtes Element, welches aus zwei Trägerschichten mit einer dazwischen eingeschlossenen Funktionsschicht besteht, in den Kartenkörper eingebracht werden. Dies hat den Vorteil, daß während des Einbringens der Anzeigeeinrichtung in den Kartenkörper keine zusätzlichen Schritte zur Herstellung der Anzeigeeinrichtung selbst erforderlich sind.

Alternativ hierzu ist in einer bevorzugten Ausgestaltung des erfindungsgemäßen Verfahrens vorgesehen, daß die Anzeigeeinrichtung schichtweise in den Kartenkörper eingebracht wird. Die schichtweise Einbringung der beiden Trägerschichten sowie der dazwischen liegenden Funktionsschicht erfolgt hierbei zusammen mit den zur Herstellung des Kartenkörpers erforderlichen, einzelnen Laminier- oder Klebeschritten.

Ein bevorzugter Verfahrensverlauf sieht hierbei folgende Schritte vor: Aufbringen einer unteren Dünnglasschicht auf mindestens eine Kartenschicht durch Laminieren oder Kleben; Aufbringen der Funktionsschicht auf die untere Dünnglasschicht; Aufbringen einer oberen Dünnglasschicht auf die Funktionsschicht; Aufbringen einer oder mehrerer Inlettfolien nach einem oder mehreren der vorhergehenden Schritte; Aufbringen mindestens einer weiteren Kartenschicht auf die obere Dünnglasschicht durch Laminieren oder Kleben.

Ein wesentlicher Vorteil hierbei ist, daß eine Fertigung von Anzeigeeinrichtungen vorab entfallen kann und die Herstellung der Anzeigeeinrichtungen in einem Verfahren mit deren Einbau in den Kartenkörper erfolgt.

Ein weiteres Verfahren zur Herstellung eines kartenförmigen Datenträgers sieht vor, daß der Kartenkörper in einem Spritzgußverfahren hergestellt wird und die Anzeigeeinrichtung während des Spritzgießens des Kartenkörpers im Kartenkörper eingebracht wird, wobei mindestens eine Dünnglasschicht der Anzeigeeinrichtung mit dem aus Kunststoff bestehenden Kartenkörper einen Glas-Kunststoff-Verbund bildet. Das Spritzgießen erlaubt eine schnelle, kostengünstige und mit relativ geringem apparativen Aufwand erreichbare Integration der Anzeigeeinrichtung in den Kartenkörper.

Bei diesem Verfahren ist es von Vorteil, wenn vor dem Einbringen der Anzeigeeinrichtung in den Kartenkörper durch Spritzgießen mindestens eine Dünnglasschicht der Anzeigeeinrichtung einer mechanischen und/ oder chemischen Oberflächenbehandlung unterzogen wird, um einen besonders stabilen und zuverlässigen Verbund zwischen der Dünnglasschicht und dem Kartenkörper herzustellen. Die Oberfläche kann beispielsweise aufgerauht oder mit einer geeigneten Beschichtung, z.B. einem sogenannten Primer, versehen werden.

Im folgenden wird die Erfindung anhand von in Figuren dargestellten Ausführungsbeispielen näher erläutert. Es zeigen:
- Fig. 1: einen Querschnitt durch eine Ausführungsform des erfindungsgemäßen Datenträgers im Bereich der Anzeigeeinrichtung, bei welcher sich der Glas-Kunststoff-Verbund in der unteren Trägerschicht aus einer Dünnglasschicht und einem unteren Teilbereich des Kartenkörpers zusammensetzt;
- Fig. 2: eine Anzeigeeinrichtung, bei welcher sich der Glas-Kunststoff-Verbund in beiden Trägerschichten jeweils aus einer Dünnglasschicht und einem Teilbereich des Kartenkörpers zusammensetzt;
- Fig. 3: eine Anzeigeeinrichtung mit einer mechanisch flexiblen Substratschicht als untere Trägerschicht;
- Fig. 4: eine Anzeigeeinrichtung mit einer Versiegelungsschicht als untere Trägerschicht;
- Fig. 5: eine Anzeigeeinrichtung in einem aus mehreren Kartenschichten zusammengesetzten Kartenkörper;
- Fig. 6: eine Anzeigeeinrichtung, die nicht unter die Erfindung fällt, bei welcher sich der Glas-Kunststoff-Verbund in beiden Trägerschichten jeweils aus einer Dünnglasschicht und einer separaten Kunststoffschicht zusammensetzt;
- Fig. 7: eine Anzeigeeinrichtung, die nicht unter die Erfindung fällt, welche gegenüber der in Fig. 6 dargestellten dadurch weitergebildet ist, daß die untere Trägerschicht durch eine Versiegelungsschicht gebildet wird.

Fig. 1 zeigt einen Querschnitt durch eine Ausführungsform des erfindungsgemäßen Datenträgers im Bereich der Anzeigeeinrichtung 4. Die in einen Kartenkörper 5 eingebrachte Anzeigeeinrichtung 4 besteht aus zwei Trägerschichten 10 und 11, welche eine Funktionsschicht 12 einschließen. Die Funktionsschicht 12 enthält Anzeigeelemente auf der Basis von Flüssigkristallen oder lumineszierenden Materialien zur Darstellung von Informationen, wie z.B. Zahlen, Buchstaben oder Bilder. Darüber hinaus enthält die Funktionsschicht 12 die für eine Ansteuerung der Anzeigeelemente erforderlichen elektronischen Einrichtungen, wie z.B. aufgedruckte Kontaktflächen (nicht dargestellt). In der Funktionsschicht 12 können außerdem gegebenenfalls erforderliche Farb- oder Polarisationsfolien (nicht dargestellt) integriert sein.

In dem gezeigten Beispiel bestehen beide Trägerschichten 10 und 11 aus einem Glas-Kunststoff-Verbund, welcher sich jeweils aus einer Dünnglasschicht 13 und Kunststoff zusammensetzt. Im Falle der unteren Trägerschicht 11 setzt sich der Glas-Kunststoff-Verbund aus einer Dünnglasschicht 13 und einem unteren Teilbereich 16 des Kartenkörpers 5 zusammen. Im Falle der oberen Trägerschicht 10 besteht der Glas-Kunststoff-Verbund aus einer Dünnglasschicht 13 und einer Kunststoffschicht 14. Typische Dicken der eingesetzten Dünnglasschichten 13 liegen etwa zwischen 10 und 100 µm. Als Kunststoffschicht 14 kommen beispielsweise Kunststoffbeschichtungen oder -folien mit typischen Dicken zwischen 5 und 200 µm in Frage. Prinzipiell ist hierbei anzumerken, daß die in der Fig. 1 gezeigte Darstellung stark schematisiert ist und keine maßstabsgetreue Wiedergabe verschiedener Schichtdicken bzw. der Dicke des Kartenkörpers 5 zeigt. Bei der dargestellten Anzeigeeinrichtung 4 sind die beiden Trägerschichten 10 und 11 so angeordnet, daß die Dünnglasschicht 13 jeweils auf der der Funktionsschicht 12 zugewandten Seite und die Kunststoffschicht 14 bzw. der Teilbereich 16 jeweils auf der von der Funktionsschicht 12 abgewandten Seite liegt.

Die seitlichen, schmalen Abstände zwischen Anzeigeeinrichtung 4 und Kartenkörper 5 erlauben eine besonders gute Anpassung beider Teile bei einer Verformung, z.B. Biegung, des Kartenkörpers 5, so daß die Bruchgefahr weiter verringert wird. Diese Abstände können entweder mit Luft oder einem geeigneten, elastischen Material ausgefüllt sein. Prinzipiell ist aber bei dem erfindungsgemäßen Datenträger auch ohne diese Abstände bereits eine sehr hohe Bruchsicherheit gewährleistet.

Bei der in Fig. 2 dargestellten Anzeigeeinrichtung 4 setzt sich der Glas-Kunststoff-Verbund in beiden Trägerschichten 10 und 11 jeweils aus einer Dünnglasschicht 13 und einem Teilbereich 15 bzw. 16 des Kartenkörpers 5 zusammen. Der obere Teilbereich 15 des Kartenkörpers 5 ist in dem gezeigten Beispiel eine obere Schicht des Kartenkörpers 5, welche die Anzeigeeinrichtung 4 vollständig abdeckt und über diese hinausgeht. Übergangsstellen oder ggf. Abstände zwischen Anzeigeeinrichtung 4 und Kartenkörper 5 werden somit vom oberen Teilbereich 15 abgedeckt, wodurch eine besonders gute Abdichtung der Anzeigeeinheit 4 erreicht werden kann. Der obere Teilbereich 15 kann beispielsweise eine durchsichtige Kunststoffolie oder aber auch eine opake Folie sein, welche zumindest im Bereich der Anzeigeeinrichtung optisch transparent ist. Für die untere Trägerschicht 11 gelten die entsprechenden, obenstehenden Erläuterungen zu Figur 1.

In Fig. 3 ist eine Anzeigeeinrichtung 4 mit einer mechanisch flexiblen Substratschicht 18 als untere Trägerschicht 11 dargestellt. Gegenüber dem in Fig. 2 dargestellten Beispiel wird hier anstelle der Dünnglasschicht 13 in der unteren Trägerschicht 11 eine Substratschicht 18 aus einem mechanisch flexiblen Material eingesetzt. Den Anforderungen an die mechanischen Eigenschaften der Anzeigeeinrichtung entsprechend kann die Substratschicht 18 beispielsweise von einer dicken oder dünnen Kunststoff- oder Metallfolie gebildet werden. Bevorzugterweise werden hierfür solche Materialien eingesetzt, deren Gasdurchlässigkeit niedrig ist, wodurch eine gute Abdichtung der Funktionsschicht 12 durch die untere Trägerschicht 11 bildende Substratschicht 18 gewährleistet wird. Idealerweise liegt die Gasdurchlässigkeit des verwendeten Materials im Größenbereich von Glas. Analog zu der beschriebenen Ausbildung eines Verbunds aus einer Dünnglasschicht 13 und einem Teilbereich 15 bzw. 16 des Kartenkörpers 5 kann die Substratschicht 18 mit einem Teilbereich 16 des Kartenkörpers ebenfalls einen Verbund ausbilden, z.B. durch Aufkleben oder Auflaminieren geeigneter Kunststoff- oder Metallfolien. Alternativ kann die Substratschicht 18 lose auf dem unteren Teilbereich 16 aufliegen und über den Verbund der oberen Dünnglasschicht 13 mit dem oberen Teilbereich 15 am Kartenkörper 5 befestigt sein. Durch die dunkelgraue Schattierung der in Fig. 3 dargestellten Substratschicht 18 ist angedeutet, daß die Substratschicht 18 nicht zwingend optisch transparent sein muß, sondern auch opak sein kann. Hierdurch kann das Hauptaugenmerk bei der Auswahl geeigneter Materialien für die Substratschicht 18 auf deren mechanische oder fertigungstechnische Eigenschaften gelegt werden. Dies gilt selbstverständlich auch für deren Eigenschaften im Hinblick auf eine gute Abdichtung gegen Gas- und Flüssigkeitsaustausch mit der Umgebung.

Fig. 4 zeigt eine Anzeigeeinrichtung mit einer Versiegelungsschicht 19 als untere Trägerschicht 11. Die Versiegelungsschicht 19 besteht hierbei aus einem geeigneten, mechanisch flexiblen Material, beispielsweise aus einer geeigneten Beschichtung. Prinzipiell kann die Versiegelungsschicht 19 auch in diesem Fall mit dem Teilbereich 16 des Kartenkörpers 5 einen Verbund ausbilden. Ein Vergleich dieses Ausführungsbeispiels mit dem in Fig. 2 dargestellten macht deutlich, daß durch die Verwendung einer Versiegelungsschicht 19 als untere Trägerschicht 11 eine deutliche Reduzierung der Dicke der Anzeigeeinrichtung erreicht wird. Wie aus dem Vergleich der Figuren 4 und 2 außerdem ersichtlich ist, kann hierdurch auch die Dicke des Kartenkörpers 5 reduziert werden, so daß ein Einsatz solcher Anzeigeeinrichtungen auch in besonders dünnen Kartenkörpern 5 oder sonstigen kartenförmigen Datenträgern, wie z.B. Ausweiskarten, möglich wird.

Fig. 5 zeigt eine Anzeigeeinrichtung mit einem aus mehreren Kartenschichten 22, 24 und 25 zusammengesetzten Kartenkörper 5. Auf eine erste Kartenschicht 22 ist eine Inlettfolie 24 aufgeklebt oder auflaminiert. In der Aussparung 23 der Inlettfolie 24 befindet sich die Anzeigeeinrichtung, welche in dem dargestellten Beispiel aus zwei Dünnglasschichten 13 und einer davon eingeschlossenen Funktionsschicht 12 besteht. Die Anzeigeeinrichtung wurde beispielsweise während des Aufklebens bzw. Auflaminierens der Inlettfolie auf die erste Kartenschicht 22 aufgebracht oder erst nachträglich in die Aussparung 23 der Inlettfolie 24 eingebracht. In beiden Fällen wurde ein aus der unteren Dünnglasschicht 13 und der ersten Kartenschicht 22 bestehender Glas-Kunststoff-Verbund ausgebildet. Die zweite Kartenschicht 25 ist auf die Inlettfolie 24 einschließlich der darin eingebrachten Anzeigeeinrichtung aufgeklebt oder auflaminiert, wobei aus der oberen Dünnglasschicht 13 und der zweiten Kartenschicht 25 ebenfalls ein Glas-Kunststoff-Verbund ausgebildet wurde.

Es ist anzumerken, daß zwischen den beiden Kartenschichten 22 und 25 prinzipiell mehrere Inlettfolien eingebracht werden können. Dies bietet sich insbesondere an, wenn die Anzeigeeinrichtung 4 schichtweise zusammen mit den zur Herstellung des Kartenkörpers 5 erforderlichen, einzelnen Laminier- oder Klebeschritten eingebracht wird. In diesem Fall kann beispielsweise zusammen mit der sukzessiven Aufbringung von unterer Dünnglasschicht 13, Funktionsschicht 12 und oberer Dünnglasschicht 13 jeweils eine Inlettfolie mit entsprechender Dicke aufgebracht werden. Dieses Verfahren hat den Vorteil, daß keine vorgefertigten Anzeigeeinrichtungen benötigt werden, da deren Herstellung und Einbau in den Kartenkörper 5 in einem einzigen Verfahren erfolgt.

## Patentansprüche

1. Kartenförmiger Datenträger, insbesondere Chipkarte, bestehend aus einem Kartenkörper (5) und einer Anzeigeeinrichtung (4),
wobei der Kartenkörper (5)
- mindestens einen Teilbereich (15, 16, 22, 25) aufweist, welcher zumindest im Bereich der Anzeigeeinrichtung (4) aus Kunststoff besteht,
und wobei die Anzeigeeinrichtung (4) umfaßt:
- zwei mechanisch flexible Trägerschichten (10,11), von denen mindestens eine Trägerschicht (10, 11) im optischen Spektralbereich transparent ist, und
- eine Funktionsschicht (12) zum Darstellen von Informationen,
**dadurch gekennzeichnet, daß**
mindestens eine der beiden Trägerschichten (10, 11) aus einem mechanisch flexiblen Glas-Kunststoff-Verbund gebildet ist, welcher sich aus einer Dünnglasschicht (13) und dem aus Kunststoff bestehenden Teilbereich (15, 16, 22, 25) des Kartenkörpers (5) zusammensetzt, wobei die Funktionsschicht (12) zwischen den beiden Trägerschichten (10, 11) angeordnet ist.

2. Kartenförmiger Datenträger nach Anspruch 1, **dadurch gekennzeichnet, daß** die andere der beiden Trägerschichten (11 bzw. 10) aus einem mechanisch flexiblen Glas-Kunststoff-Verbund gebildet ist, welcher sich aus einer Dünnglasschicht (13) und einer separaten Kunststoffschicht (14) zusammensetzt.

3. Kartenförmiger Datenträger nach Anspruch 2,
**dadurch gekennzeichnet, daß**
der sich aus einer Dünnglasschicht (13) und einer separaten Kunststoffschicht (14) zusammensetzende Glas-Kunststoff-Verbund in mindestens einer Trägerschicht (10, 11) so angeordnet ist, daß die Dünnglasschicht (13) auf der der Funktionsschicht (12) zugewandten Seite und die separate Kunststoffschicht (14) auf der von der Funktionsschicht (12) abgewandten Seite liegt.

4. Kartenförmiger Datenträger nach einem der Ansprüche 1 bis 3,
**dadurch gekennzeichnet, daß**
sich der Glas-Kunststoff-Verbund in der oberen Trägerschicht (10) aus einer Dünnglasschicht (13) und einem oberen, aus Kunststoff bestehenden Teilbereich (15) des Kartenkörpers (5) zusammensetzt.

5. Kartenförmiger Datenträger nach einem der Ansprüche 1 bis 3,
**dadurch gekennzeichnet, daß**
sich der Glas-Kunststoff-Verbund in der unteren Trägerschicht (11) aus einer Dünnglasschicht (13) und einem unteren, aus Kunststoff bestehenden Teilbereich (16) des Kartenkörpers (5) zusammensetzt.

6. Kartenförmiger Datenträger nach einem der Ansprüche 1, 3 oder 4,
**dadurch gekennzeichnet, daß** die untere Trägerschicht (11) eine Substratschicht (18) aus einem mechanisch flexiblen Material ist.

7. Kartenförmiger Datenträger nach einem der Ansprüche 1, 3 oder 4, **dadurch gekennzeichnet, daß** die untere Trägerschicht (11) eine die Funktionsschicht (12) versiegelnde, mechanisch flexible Versiegelungsschicht (19) ist.

8. Kartenförmiger Datenträger nach einem der Ansprüche 6 oder 7,
**dadurch gekennzeichnet, daß**
die Substratschicht (18) bzw. die Versiegelungsschicht (19) aus einem Material besteht, dessen Gasdiffusionskoeffizient im Größenbereich von Glas liegt.

9. Kartenförmiger Datenträger nach einem der Ansprüche 1 bis 8 ,
**dadurch gekennzeichnet, daß**
die Funktionsschicht (12) eine elektronisch ansteuerbare Anzeige auf der Basis von Flüssigkristallen (LC), lichtemittierenden Dioden (LED) oder lichtemittierenden organischen Polymeren aufweist.

10. Kartenförmiger Datenträger nach einem der Ansprüche 1 bis 9,
**dadurch gekennzeichnet, daß**
die Funktionsschicht (12) elektronische Einrichtungen und/oder optische Einrichtungen zur Steuerung bzw. Beeinflussung der Darstellung von Informationen aufweist.

11. Verfahren zur Herstellung eines kartenförmigen Datenträgers, bestehend aus einem Kartenkörper (5) und einer Anzeigeeinrichtung (4), wobei die Anzeigeeinrichtung (4) durch Kleben oder Laminieren am Kartenkörper (5) befestigt oder in den Kartenkörper (5) eingebracht wird, und wobei die Anzeigeeinrichtung (4) umfaßt:
- zwei mechanisch flexible Trägerschichten (10, 11), von denen mindestens eine Trägerschicht (10, 11) im optischen Spektralbereich transparent ist, und
- eine Funktionsschicht (12) zum Darstellen von Informationen,
**dadurch gekennzeichnet, daß**
- der Kartenkörper (5) aus mehreren Kartenschichten (22, 24, 25), von denen mindestens eine aus Kunststoff besteht, durch Kleben oder Laminieren zusammengesetzt wird und
- mindestens eine Dünnglasschicht (13) der Anzeigeeinrichtung (4) mit einer aus Kunststoff bestehenden Kartenschicht (22, 24, 25) des Kartenkörpers (5) durch Kleben oder Laminieren verbunden wird, wodurch ein sich aus der Dünnglasschicht (13) der Anzeigeeinrichtung (4) und der aus Kunststoff bestehenden Kartenschicht (22, 24, 25) des Kartenkörpers zusammensetzender Glas-Kunststoff-Verbund gebildet wird,
derart, dass mindestens eine der beiden Trägerschichten (10, 11) aus dem Glas-Kunststoff-Verbund gebildet ist und dass die Funktionsschicht (12) zwischen den beiden Trägerschichten (10, 11) angeordnet ist.

12. Verfahren nach Anspruch 11,
**gekennzeichnet durch** folgende Schritte:
- Bereitstellen einer ersten Kartenschicht (22);
- Aufbringen mindestens einer mit einer Aussparung (23) zur Aufnahme der Anzeigeeinrichtung versehenen Inlettfolie (24) auf die erste Kartenschicht (22) **durch** Kleben oder Laminieren;
- Einbringen der Anzeigeeinrichtung (4) in die Aussparung (23) der Inlettfolie (24); und
- Aufbringen einer zweiten Kartenschicht (25) auf die Inlettfolie (24) **durch** Kleben oder Laminieren.

13. Verfahren nach einem der Ansprüche 11 bis 12,
**dadurch gekennzeichnet, daß**
die Anzeigeeinrichtung (4) als vorgefertigtes Element, welches aus den zwei Trägerschichten (10, 11) mit der dazwischen eingeschlossenen Funktionsschicht (12) besteht, in den Kartenkörper (5) eingebracht wird.

14. Verfahren nach einem der Ansprüche 11 bis 12,
**dadurch gekennzeichnet, daß**
die Anzeigeeinrichtung (4) schichtweise zusammen mit den zur Herstellung des Kartenkörpers (5) erforderlichen, einzelnen Laminier- oder Klebeschritten in den Kartenkörper (5) eingebracht wird.

15. Verfahren nach Anspruch 14, **gekennzeichnet durch** folgende Schritte:
- Aufbringen einer unteren Dünnglasschicht (13) auf mindestens eine Kartenschicht (22) **durch** Laminieren oder Kleben;
- Aufbringen der Funktionsschicht (12) auf die untere Dünnglasschicht (13);
- Aufbringen einer oberen Dünnglasschicht (13) auf die Funktionsschicht (12);
- Aufbringen einer oder mehrerer Inlettfolien (24) zusammen mit einem oder mehreren der vorhergehenden Schritte;
- Aufbringen mindestens einer weiteren Kartenschicht (25) auf die obere Dünnglasschicht (13) **durch** Laminieren oder Kleben.

16. Verfahren zur Herstellung eines kartenförmigen Datenträgers, bestehend aus einem Kartenkörper (5) und einer Anzeigeeinrichtung (4), wobei der Kartenkörper (5) in einem Spritzgußverfahren hergestellt wird und die Anzeigeeinrichtung (4) während des Spritzgießens des Kartenkörpers (5) in den Kartenkörper (5) eingebracht wird, wobei die Anzeigeeinrichtung (4) umfaßt:
- zwei mechanisch flexible Trägerschichten (10,11), von denen mindestens eine Trägerschicht (10,11) im optischen Spektralbereich transparent ist, und
- eine Funktionsschicht (12) zum Darstellen von Informationen,
**dadurch gekennzeichnet, daß**
mindestens eine der beiden Trägerschichten (10, 11) aus einem mechanisch flexiblen Glas-Kunststoff-Verbund gebildet ist, welcher sich aus einer Dünnglasschicht (13) und dem aus Kunststoff bestehenden Teilbereich (15, 16, 22, 25) des Kartenkörpers (5) zusammensetzt, wobei die Funktionsschicht (12) zwischen den beiden Trägerschichten (10,11) angeordnet ist.

17. Verfahren nach Anspruch 16,
**dadurch gekennzeichnet, daß**
vor dem Einbringen der Anzeigeeinrichtung (4) in den Kartenkörper (5) durch Spritzgießen mindestens eine Dünnglasschicht (13) der Anzeigeeinrichtung (4) einer mechanischen und/ oder chemischen Oberflächenbehandlung unterzogen wird.

## Claims

1. A card-shaped data carrier, in particular smart card, consisting of a card body (5) and a display device (4), wherein the card body (5)
- has at least one partial area (15, 16, 22, 25) made of plastic at least in the area of the display device (4),
and wherein the display device (4) includes:
- two mechanically flexible carrier layers (10, 11) of which at least one carrier layer (10, 11) is transparent in the optical spectral region, and
- a functional layer (12) for representing information,
**characterized in that** at least one of the two carrier layers (10, 11) is formed of a mechanically flexible glass-plastic composite composed of a thin-glass layer (13) and the plastic partial area (15, 16, 22, 25) of the card body (5), whereby the functional layer (12) is disposed between the two carrier layers (10, 11).

2. A card-shaped data carrier according to claim 1, **characterized in that** the other of the two carrier layers (11 or 10) is formed of a mechanically flexible glass-plastic composite composed of a thin-glass layer (13) and a separate plastic layer (14).

3. A card-shaped data carrier according to claim 2, **characterized in that** the glass-plastic composite composed of a thin-glass layer (13) and a separate plastic layer (14) is disposed in at least one carrier layer (10, 11) such that the thin-glass layer (13) is on the side facing the functional layer (12), and the separate plastic layer (14) on the side facing away from the functional layer (12).

4. A card-shaped data carrier according to any of claims 1 to 3, **characterized in that** the glass-plastic composite is composed in the upper carrier layer (10) of a thin-glass layer (13) and an upper plastic partial area (15) of the card body (5).

5. A card-shaped data carrier according to any of claims 1 to 3, **characterized in that** the glass-plastic composite is composed in the lower carrier layer (11) of a thin-glass layer (13) and a lower plastic partial area (16) of the card body (5).

6. A card-shaped data carrier according to any of claims 1, 3 or 4, **characterized in that** the lower carrier layer (11) is a substrate layer (18) of mechanically flexible material.

7. A card-shaped data carrier according to any of claims 1, 3 or 4, **characterized in that** the lower carrier layer (11) is a mechanically flexible sealing layer (19) sealing the functional layer (12).

8. A card-shaped data carrier according to either of claims 6 and 7, **characterized in that** the substrate layer (18) or the sealing layer (19) is made of a material whose gas diffusion coefficient is in the range of glass.

9. A card-shaped data carrier according to any of claims 1 to 8, **characterized in that** the functional layer (12) has an electronically drivable display based on liquid crystals (LC), light-emitting diodes (LED) or light-emitting organic polymers.

10. A card-shaped data carrier according to any of claims 1 to 9, **characterized in that** the functional layer (12) has electronic devices and/or optical devices for controlling or influencing the representation of information.

11. A method for producing a card-shaped data carrier consisting of a card body (5) and a display device (4), wherein the display device (4) is fastened to the card body (5) by gluing or lamination or incorporated into the card body (5), and wherein the display device (4) includes:
- two mechanically flexible carrier layers (10, 11) of which at least one carrier layer (10, 11) is transparent in the optical spectral region, and
- a functional layer (12) for representing information,
**characterized in that**
- the card body (5) is composed by gluing or lamination of a plurality of card layers (22, 24, 25), at least one of which is made of plastic, and
- at least one thin-glass layer (13) of the display device (4) is connected by gluing or lamination with a plastic card layer (22, 24, 25) of the card body (5), thereby forming a glass-plastic composite composed of the thin-glass layer (13) of the display device (4) and the plastic card layer (22, 24, 25) of the card body,
in such a way that at least one of the two carrier layers (10, 11) is formed of the glass-plastic composite, and the functional layer (12) is disposed between the two carrier layers (10, 11).

12. A method according to claim 11, **characterized by** the following steps:
- providing a first card layer (22);
- applying at least one inlay film (24) provided with a gap (23) for receiving the display device to the first card layer (22) by gluing or lamination;
- incorporating the display device (4) into the gap (23) of the inlay film (24); and
- applying a second card layer (25) to the inlay film (24) by gluing or lamination.

13. A method according to either of claims 11 and 12, **characterized in that** the display device (4) is incorporated into the card body (5) as a prefabricated element consisting of two carrier layers (10, 11) with a functional layer (12) enclosed therebetween.

14. A method according to either of claims 11 and 12, **characterized in that** the display device (4) is incorporated into the card body (5) layer by layer together with the individual laminating or gluing steps necessary for producing the card body (5).

15. A method according to claim 14, **characterized by** the following steps:
- applying a lower thin-glass layer (13) to at least one card layer (22) by lamination or gluing;
- applying the functional layer (12) to the lower thin-glass layer (13);
- applying an upper thin-glass layer (13) to the functional layer (12);
- applying one or more inlay films (24) together with one or more of the preceding steps;
- applying at least one further card layer (25) to the upper thin-glass layer ( 13) by lamination or gluing.

16. A method for producing a card-shaped data carrier consisting of a card body (5) and a display device (4), wherein the card body (5) is produced by injection molding and the display device (4) is incorporated into the card body (5) during injection molding of the card body (5), wherein the display device (4) includes:
- two mechanically flexible carrier layers (10, 11) of which at least one carrier layer (10, 11) is transparent in the optical spectral region, and
- a functional layer (12) for representing information,
**characterized in that** at least one of the two carrier layers (10, 11) is formed of a mechanically flexible glass-plastic composite composed of a thin-glass layer (13) and the plastic partial area (15, 16, 22, 25) of the card body (5), whereby the functional layer (12) is disposed between the two carrier layers (10, 11).

17. A method according to claim 16, **characterized in that** before incorporation of the display device (4) into the card body (5) by injection molding at least one thin-glass layer (13) of the display device (4) is subjected to a mechanical and/or chemical surface treatment.

## Revendications

1. Support de données sous forme de carte, en particulier carte à puce, se composant d'un corps de carte (5) et d'un dispositif d'affichage (4),le corps de carte (5) comprenant
- au moins une zone partielle (15, 16, 22, 25) qui, au moins dans la zone du dispositif d'affichage (4), se compose de matériau synthétique
et le dispositif d'affichage (4) comprenant :
- deux couches porteuses mécaniquement flexible (10, 11), dont au moins une couche porteuse (10, 11) est transparente dans la zone spectrale optique, et
- une couche fonctionnelle (12) pour présenter des informations,
**caractérisé en ce qu'**au moins une des deux couches porteuses (10, 11) est constituée d'un composite verre-matériau synthétique mécaniquement flexible, qui se compose de l'assemblage d'une couche mince de verre (13) et de la zone partielle (15, 16, 22, 25) du corps de carte (5) composée de matériau synthétique, la couche fonctionnelle (12) étant disposée entre les deux couches porteuses (10, 11).

2. Support de données sous forme de carte selon la revendication 1, **caractérisé en ce que** l'autre des deux couches porteuses (11 ou 10) est formée d'un composite verre-matériau synthétique mécaniquement flexible, lequel est constitué par l'assemblage d'une couche mince de verre (13) et par une couche séparée (14) en matériau synthétique.

3. Support de données sous forme de carte selon la revendication 2, **caractérisé en ce que** le composite verre-matériau synthétique constitué par l'assemblage d'une couche mince de verre (13) et par une couche séparée de matériau synthétique (14) est disposé dans au moins une couche porteuse (10, 11) de telle façon que la couche mince de verre (13) se trouve sur la face tournée vers la couche fonctionnelle (12) et que la couche séparée (14) de matériau synthétique se trouve sur la face opposée à la couche fonctionnelle (12).

4. Support de données sous forme de carte selon l'une des revendications 1 à 3, **caractérisé en ce que** le composite verre-matériau synthétique est constitué dans la couche porteuse supérieure (10) de l'assemblage d'une couche mince de verre (13) et d'une zone partielle supérieure (15) du corps de carte (5) composée de matériau synthétique.

5. Support de données sous forme de carte selon l'une des revendications 1 à 3, **caractérisé en ce que** le composite verre-matériau synthétique se compose de l'assemblage dans la couche porteuse inférieure (11) d'une couche mince de verre (13) et d'une zone partielle inférieure (16) du corps de carte (5) composée de matériau synthétique.

6. Support de données sous forme de carte selon l'une des revendications 1, 3 ou 4, **caractérisé en ce que** la couche porteuse inférieure (11) est une couche de substrat (18) en un matériau mécaniquement flexible.

7. Support de données sous forme de carte selon l'une des revendications 1, 3 ou 4, **caractérisé en ce que** la couche porteuse inférieure (11) est une couche de scellement (19) mécaniquement flexible scellant la couche fonctionnelle (12).

8. Support de données sous forme de carte selon l'une des revendications 6 ou 7, **caractérisé en ce que** la couche de substrat (18) ou la couche de scellement (19) se compose d'un matériau dont le coefficient de diffusion gazeuse se situe dans l'ordre de grandeur de celui du verre.

9. Support de données sous forme de carte selon l'une des revendications 1 à 8, **caractérisé en ce que** la couche fonctionnelle (12) comporte un affichage à commande électronique et qui est à base de cristaux liquides (LC), de diodes électroluminescentes (LED) ou de polymères organiques électroluminescents.

10. Support de données sous forme de carte selon l'une des revendications 1 à 9, **caractérisé en ce que** la couche fonctionnelle (12) comporte des dispositifs électroniques et/ou des dispositifs optiques pour commander ou pour influencer la présentation d'informations.

11. Procédé pour la fabrication d'un support de données sous forme de carte se composant d'un corps de carte (5) et d'un dispositif d'affichage (4), le dispositif d'affichage (4) étant fixé par collage ou par stratification sur le corps de carte (5) ou étant introduit dans le corps de carte (5), et dans lequel le dispositif d'affichage (4) comprend :
- deux couches porteuses (10, 11) mécaniquement flexible, dont au moins une couche porteuse (10, 11) est transparente dans la zone spectrale optique, et
- une couche fonctionnelle (12) pour présenter des informations,
**caractérisé**
- **en ce que** le corps de carte (5) est constitué par collage ou par stratification de l'assemblage de plusieurs couches de cartes (22, 24, 25), dont au moins une est composée de matériau synthétique et
- **en ce qu'**au moins une couche mince de verre (13) du dispositif d'affichage (4) est reliée par collage ou par stratification à une couche de carte (22, 24, 25) composée de matériau synthétique du corps de carte (5), de manière à former un composite verre-matériau synthétique constitué de l'assemblage de la couche mince de verre (13) du dispositif d'affichage (4) et de la couche de carte (22, 24, 25) composée de matériau synthétique, et ceci de sorte qu'au moins l'une des deux couches porteuses (10, 11) soit constituée par du composite verre-matériau synthétique et que la couche fonctionnelle (12) soit disposée entre les deux couches porteuses (10, 11).

12. Procédé selon la revendication 11, **caractérisé par** les étapes suivantes :
- préparation d'une première couche de carte (22) ;
- application sur la première couche de carte (22) par collage ou par stratification d'au moins une feuille insérée (24) munie d'un évidemment (23) pour recevoir le dispositif d'affichage ;
- mise en place du dispositif d'affichage (4) dans l'évidement (23) de la feuille insérée (24) ; et
- application par collage ou stratification d'une deuxième couche de carte (25) sur la feuille insérée (24).

13. Procédé selon l'une des revendications 11 à 12, **caractérisé en ce que** le dispositif d'affichage (4) est introduit dans le corps de carte (5) en tant qu'élément préfabriqué se composant des deux couches porteuses (10, 11) entre lesquelles est enfermée la couche fonctionnelle (12).

14. Procédé selon l'une des revendications 11 à 12, **caractérisé en ce que** le dispositif d'affichage (4) est introduit par couches dans le corps de carte (5) en même temps que les différentes étapes de stratification ou de collage nécessaires pour la fabrication du corps de carte (5).

15. Procédé selon la revendication 14, **caractérisé par** les étapes suivantes :
- application par stratification ou par collage d'une couche inférieure mince de verre (13) sur au moins une couche de carte (22) ;
- application de la couche fonctionnelle (12) sur la couche inférieure mince de verre (13) ;
- application d'une couche supérieure mince de verre (13) sur la couche fonctionnelle (12) ;
- application d'une ou de plusieurs feuilles insérée(s) (24) au cours d'une ou plusieurs des étapes précédentes, et
- application par stratification ou par collage d'au moins une autre couche de carte (25) sur la couche supérieure mince de verre (13).

16. Procédé pour la fabrication d'un support de données sous forme de carte se composant d'un corps de carte (5) et d'un dispositif d'affichage (4), le corps de carte (5) étant réalisé par un procédé de moulage par injection et le dispositif d'affichage (4) étant introduit dans le corps de carte (5) lors du moulage par injection du corps de carte (5), dans lequel le dispositif d'affichage (4) comprend
- deux couches porteuses mécaniquement flexibles (10, 11), dont au moins une couche porteuse (10, 11) est transparente dans la zone spectrale optique et
- une couche fonctionnelle (12) pour présenter des informations,
**caractérisé en ce qu'**au moins l'une des deux couches porteuses (10, 11) est constituée d'un composite verre-matériau synthétique mécaniquement flexible qui se compose de l'assemblage d'une couche mince de verre (13) et de la zone partielle (15, 16, 22, 25) du corps de carte (5) composée de matériau synthétique, la couche fonctionnelle (12) étant disposée entre les deux couches porteuses (10, 11).

17. Procédé selon la revendication 16,**caractérisé en ce qu'**avant l'introduction par moulage par injection du dispositif d'affichage (4) dans le corps de carte (5), au moins une couche mince de verre (13) du dispositif d'affichage (4) est soumise à un traitement de surface mécanique et/ou chimique.
